# EUROPEAN PATENT APPLICATION

(11) **EP 2 116 706 A1**
(43) Date of publication of application: **11.11.2009**
(21) Application number: 08721453.2
(22) Date of filing: 06.03.2008
(51) Int. Cl.: F02D 41/04, F02D 41/22, F02D 43/00, F02D 45/00

(54) **CONTROL DEVICE FOR INTERNAL COMBUSTION ENGINE**

(30) Priority: 06.03.2007 JP 2007055404
(71) Applicant: Toyota Jidosha Kabushiki Kaisha, Toyota-shi Aichi 471-8571 (JP)
(72) Inventor: MIYAURA, Takeshi, Toyota-shi Aichi 471-8571 (JP); TERADA, Yasuyuki, Toyota-shi Aichi 471-8571 (JP)
(74) Representative: Intes, Didier Gérard André
(86) International application number: PCT/JP2008/054033
(87) International publication number: WO 2008/108426

(57) **Abstract**

A control device of a diesel engine is disclosed. The control device controls a wall surface temperature of an exhaust manifold so as not to exceed an upper limit temperature and improves output performance of the diesel engine when a depression amount of an accelerator pedal is maximum. The control device has an ECU. The ECU estimates the wall surface temperature of the exhaust manifold based on a fuel injection amount and rotation speed of the engine. When determining that the wall surface temperature of the exhaust manifold can reach the upper limit temperature of the exhaust manifold, the ECU computes a temperature increasing period from when it is determined that the wall surface temperature of the exhaust manifold can reach the upper limit temperature to when the wall surface temperature reaches the upper limit temperature. During the temperature increasing period, the ECU corrects the fuel injection amount to a corrected injection amount that is obtained by adding an increase correction amount corresponding to the temperature increasing period to the upper limit injection amount.

## Description

### TECHNICAL FIELD

The present invention relates to a control device for an internal combustion engine such as a diesel engine, especially to a control device that controls then operation state of an internal combustion engine such that the wall surface temperature of the exhaust manifold does not exceed an upper limit temperature.

### BACKGROUND OF ART

A control device is mounted to a vehicle, which device controls the operation state of the engine such that a temperature of a certain portion does not exceed a predetermined upper limit temperature so as to protect the engine or the transmission. For example, the control device restricts a maximum injection amount of fuel so as not to exceed the upper limit temperature, when a full load request is made, that is, when the depressed amount of the accelerator pedal is maximum. In most of diesel engines that are mounted to an automobile, the upper limit temperature is set to, for example, approximately 700 to 800 centigrade based on the wall surface temperature of the exhaust manifold so as to prevent an exhaust pipe made of casting from being melted due to overheating. When the engine is in an operation state that allows the wall surface temperature of the exhaust manifold to reach the upper limit temperature, the control device controls the maximum injection amount of fuel such that the wall surface temperature of the exhaust manifold does not exceed the upper limit temperature even if the full load request is made or an acceleration request close to the full load request is made by a driver.

Patent Document 1 discloses a technique in which the exhaust temperature is reduced to be or lower than an upper limit temperature by injecting fuel to the exhaust pipe when it is determined that the acceleration request is made while the exhaust temperature is equal to or greater than the upper limit temperature.

When an injection amount command value for controlling the fuel injection amount is controlled such that the wall surface temperature of the exhaust manifold does not exceed the upper limit temperature, the fuel injection amount does not correspond to the accelerator pedal depression amount. This may cause frequent repetition of starting and stopping of an exhaust gas recirculation device when a full load request is made. To avoid this situation, Patent Document 2 discloses that when the engine speed is being increased, an acceleration smoothing injection amount is computed based on a basic injection amount that has been previously computed, and the basic injection amount is computed based on the smaller one of the acceleration smoothing injection amount and the governor pattern injection amount.

If a configuration where a sensor detects the temperature of the exhaust gas is applied, it may be difficult to execute control for precisely following the engine operation state due to the response delay of the sensor. Therefore, in Patent Document 3, an energy variable corresponding to waste heat energy and a supplied gas amount variable corresponding to the amount of gas supplied to a cylinder are obtained, and an increased temperature of the exhaust gas with respect to the gas temperature when the gas is supplied to the cylinder is computed.

However, in the above-described prior art, since an engine output power is restricted to suppress increase of the wall surface temperature of the exhaust manifold in a transient operation state from when a full load acceleration request is made to when the wall surface temperature of the exhaust manifold reaches the upper limit temperature, the performance of the engine cannot be sufficiently extracted.

Since it is necessary to ensure reliability of control for controlling the engine output power, the maximum injection amount in the full load operation is determined in a stable normal state, that is, in a bench test. Therefore, for example, when an acceleration request is made by a driver in an actual vehicle, even if supercharging pressure or intake temperature of the diesel engine satisfies the control conditions of the engine output power and the temperature of the exhaust gas increases to the vicinity of the upper limit temperature of the wall surface temperature of the exhaust manifold, a period during which the actual wall surface temperature of the exhaust manifold is less than the upper limit temperature may be relatively long or the transient running state may be terminated before the actual wall surface temperature of the exhaust manifold reaches the upper limit temperature. Therefore, the output power of the engine is restricted even if sufficient reliability of the wall surface temperature of the exhaust manifold is obtained. As a result, sufficient starting and acceleration response of a vehicle corresponding to the performance of the engine cannot be obtained.
Patent Document 1: Japanese Laid-Open Patent Publication No. 2006-70818
Patent Document 2: Japanese Laid-Open Patent Publication No. 8-296470
Patent Document 3: Japanese Laid-Open Patent Publication No. 2004-211560

### DISCLOSURE OF THE INVENTION

An objective of the present invention is to provide a control device for an internal combustion engine that controls the wall surface temperature of the exhaust manifold so as not to exceed the upper limit temperature, and improves the output performance of the engine in response to a full load operation request.

To achieve the above object, the present invention provides a control device for an internal combustion engine. The control device has a request detection section, an operation state detection section, an injection amount computation section and a determination section. The request detection section detects an output power increasing request that increases an output power of the internal combustion engine. The operation state detection section detects an operation state of the internal combustion engine including rotation speed of the internal combustion engine. The injection amount computation section computes a fuel injection amount of the internal combustion engine based on detection information obtained from the request detection section and the operation state detection section. The determination section determines whether a wall surface temperature of an exhaust manifold, which is mounted in the internal combustion engine, can reach a previously set upper limit temperature when fuel of the fuel injection amount that is computed by the injection amount computation section is injected. When it is determined that the wall surface temperature of the exhaust manifold can reach the upper limit temperature, the fuel injection amount is restricted to an upper limit injection amount, which is previously set according to the upper limit temperature. The control device has a wall surface temperature estimation section, a time period computation section and an injection amount correction section. The wall surface temperature estimation section estimates the wall surface temperature of the exhaust manifold based on the detection information obtained by the operation state detection section. When it is determined that the wall surface temperature of the exhaust manifold can reach the upper limit temperature, the time period computation section computes a temperature increasing period from when it is determined that the wall surface temperature of the exhaust manifold can reach the upper limit temperature to when the wall surface temperature reaches the upper limit temperature based on the estimated wall surface temperature and the detection information obtained by the operation state detection section. The injection amount correction section corrects the fuel injection amount to a corrected injection amount that is obtained by adding an increase correction amount corresponding to the temperature increasing period to the upper limit injection amount during the temperature increasing period.

### BRIEF DESCRIPTION OF DRAWINGS

Fig. 1 is a diagram of a control device for an internal combustion engine according to one embodiment of the present invention;
Fig. 2 is a block diagram showing map information that is stored in a ROM of the control device of Fig. 1;
Fig. 3(a) is a graph for explaining an increase correction of a fuel injection amount that is executed by the control device of Fig. 1;
Fig. 3(b) is a graph showing a relationship between the increasing injection amount and an offset amount;
Fig. 4 is a flowchart showing a process performed by the control device of Fig. 1 according to an injection amount restricting control program; and
Fig. 5 a timing chart for explaining the process of Fig. 4.

### BEST MODE FOR CARRYING OUT THE PRESENT INVENTION

A preferred embodiment of the present invention will be explained with reference to the drawings.

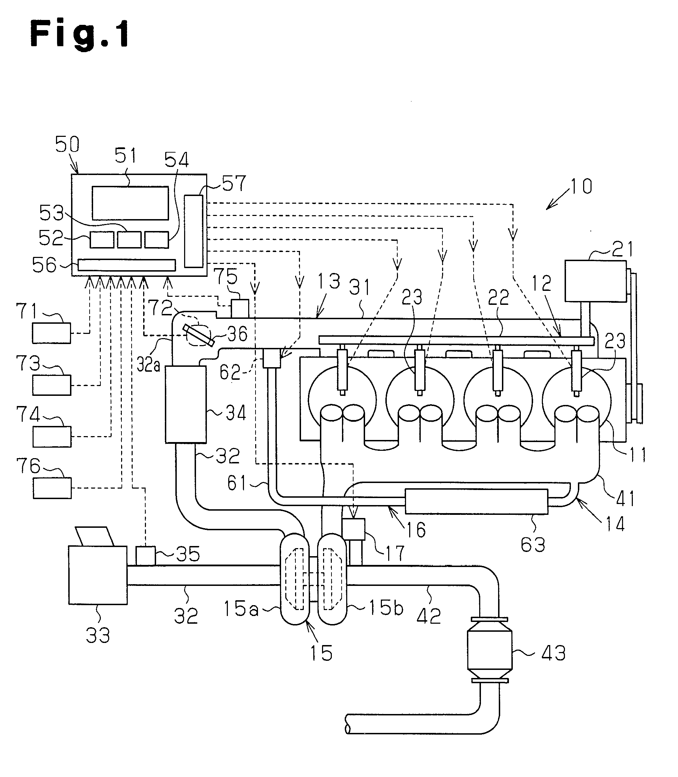

According to Figs. 1 to 5, one embodiment of the present invention will be explained. According to the embodiment, the present invention is applied to a control device of a diesel engine.

In Fig. 1, a diesel engine 10 has a plurality of cylinders 11, a fuel injection device 12 of a common rail type, an intake device 13, an exhaust device 14, a supercharger 15, and an exhaust recirculation device 16. The fuel injection device 12 injects fuel (for example, diesel) to a combustion chamber (not shown in details) in each cylinder 11. The intake device 13 draws air to each combustion chamber. The exhaust device 14 discharges exhaust gas from each combustion chamber. The supercharger 15 compresses air in the intake device 13 by utilizing exhaust energy in the exhaust device 14 and supercharges air to each combustion chamber. The exhaust recirculation device 16 returns a part of the exhaust gas to the intake device 13.

The fuel injection device 12 has a supply pump 21, a common rail 22, and a plurality of fuel injection valves 23. The supply pump 21 pumps up fuel from a fuel tank (not shown) and pressurizes the fuel. High-pressure fuel, which is supplied from the supply pump 21, is introduced to the common rail 22. The fuel injection valves 23 inject fuel that is supplied via the common rail 22 to the combustion chambers. Each fuel injection valve 23 is actuated at a timing and an opening degree (duty cycle) corresponding to an injection command signal from an ECU (electronic control unit) 50.

The supply pump 21 is actuated by rotation force of the engine 10, and the common rail 22 receives high pressure from the supply pump 21 and evenly distributes the fuel to a plurality of fuel injection valves 23. Each fuel injection valve 23 is comprised of a known needle valve that is actuated by an electromagnetic force and injects and supplies fuel of an amount corresponding to a pulsed injection command signal each cycle of which lasts a predetermined period. The fuel injection amount injected from the fuel injection valve 23 is controlled by controlling the ratio of the valve opening period in the predetermined period during which the injection command signal is output. The fuel injection device 12 may have a fuel addition nozzle that injects to the exhaust device 14 a part of the fuel that is pumped up by the supply pump 21. The fuel addition nozzle opens its valve when fuel is supplied with fuel pressure of predetermined pressure or more and injects the fuel into an exhaust manifold 41 of the exhaust device 14 to vaporize the fuel.

The intake device 13 has an intake manifold 31, an intake pipe 32, an air cleaner 33, an intercooler 34, an air flowmeter 35, and a throttle valve 36. The intake pipe 32 is provided on the upstream side of the intake manifold 31. The air cleaner 33 is provided on the upstream side of the intake pipe 32 and purifies the intake air by a filter. The intercooler 34 is provided on the downstream side of the supercharger 15 and cools down the intake air, which has been heated up by the supercharging. The air flowmeter 35 detects the intake air amount. The throttle valve 36 controls the intake air amount supplied to the engine 10. This configuration is the same as the known one and is an electronic control type. According to the control device of the electronic control type, for example, a throttle opening degree of the throttle valve 36 is controlled by an actuator (not shown) without any stages. A sign 32a represents a surge tank.

The exhaust device 14 has an exhaust manifold 41, for example, made of a casting, an exhaust pipe 42 and an exhaust purifying unit 43. The exhaust pipe 42 is provided on the downstream side of the exhaust manifold 41. The exhaust purifying unit 43 is provided on the downstream side of the supercharger 15 and mounted to the exhaust pipe 42. The exhaust purifying unit 43 reduces NOx contained in the exhaust gas to NO₂ or NO and reacts the reduced NO₂ or NO with HC or CO contained in the exhaust gas to generate N₂. Also the exhaust purifying unit 43 oxidizes HC or CO contained in the exhaust gas to generate H₂O or CO₂. The fuel injection from the fuel addition nozzle can be used for the reduction reaction and the oxidation reaction.

The supercharger 15 has an intake air compressor 15a and an exhaust turbine 15b, which is connected to the compressor 15a so as to be rotatable integrally therewith. The supercharger 15 is a known supercharger. The exhaust turbine 15b is rotated by exhaust energy to rotate the intake air compressor 15a, and as a result, air of positive pressure is suctioned to the engine 10. The actuator 17 of the exhaust manifold 41, which is arranged closer to the exhaust turbine 15b, has a function of waste gate valve and forms an exhaust passage for bypassing the exhaust turbine 15b according to the opening degree of the valve.

The exhaust recirculation device 16 has an EGR passage 61 for recirculation of exhaust gas. The EGR passage 61 bypasses the combustion chambers in the engine and connect the exhaust passage in the exhaust manifold 41 to the intake passage in the intake manifold 31. An EGR valve 62 and an EGR cooler 63 are provided on the EGR passage 61. The EGR valve 62 controls an exhaust gas recirculation amount (EGR amount), and the EGR cooler 63 cools down exhaust gas recirculating through the EGR passage 61.

The supply pump 21, the fuel injection valve 23, the throttle valve 36, and the EGR valve 62 are electronically controlled by the ECU 50. The ECU 50 executes a predetermined control program at predetermined intervals.

Specifically, the ECU 50 has a CPU (central processing unit) 51, a ROM (read only memory) 52, a RAM (random access memory) 53, an EEPROM (electronically erasable and programmable read only memory) 54, an input interface circuit 56 including an A/D converter and a buffer, and an output interface circuit 57 including a drive circuit.

The input interface circuit 56 is connected to the air flowmeter 35, a pedal depression amount sensor 71, a throttle opening degree sensor 72 and a crank angle sensor (rotation speed sensor) 73. The pedal depression amount sensor 71 detects a depressed amount of the accelerator pedal (not shown). The throttle opening degree sensor 72 detects an opening degree of the throttle valve 36. The crank angle sensor 73 outputs a signal corresponding to the engine rotation speed. The crank angle sensor 73 outputs a pulsed signal every time a crankshaft of the engine 10 is rotated by a predetermined angle. The input interface circuit 56 is connected to a vehicle speed sensor 74, an intake pipe pressure sensor 75, and a temperature sensor 76. The vehicle speed sensor 74 detects a running speed or a wheel rotation speed of the vehicle on which the engine 10 is mounted. The intake pipe pressure sensor 75 detects intake pressure (supercharging pressure) of the engine 10. The temperature sensor 76 detects temperature of air in the vicinity of the engine 10 based on outer air introduced from a front side of the vehicle or the intake air. Signals output from the sensors 71 to 76 are sent to the ECU 50.

The pedal depression amount sensor 71 is a request detection section that detects the depressed amount of the accelerator pedal as an output power increasing request amount for increasing the output power of the engine 10. The air flowmeter 35, the throttle opening degree sensor 72, the crank angle sensor 73, the vehicle speed sensor 74, the intake pipe pressure sensor 75, and the temperature sensor 76 form an operation state detection section that detects an operation state of the engine 10.

The output interface circuit 57 is connected to each of the actuator 17, the supply pump 21, the fuel injection valves 23 and the EGR valve 62 via a corresponding drive circuit (not shown).

The ROM 52 stores an injection amount computing program, a determination program, and an injection amount restriction control program.

According to the injection amount computing program, the fuel injection amount injected to the combustion chambers of the engine 10 is computed based on an acceleration request from the pedal depression amount sensor 71, the intake air amount from the air flowmeter 35, and the engine rotation speed from the crank angle sensor 73 that are sent to the input interface circuit 56 every predetermined period. The ECU 50 functions as an injection amount computation section. According to the determination program, it is determined whether the wall surface temperature of a predetermined position of the exhaust manifold 41 closer to the upstream can reach the upper limit temperature (for example, 70 degrees centigrade), which is previously set, when fuel of the fuel injection amount that is computed by the execution of the injection amount computing program is injected. According to the determination program, the ECU 50 determines whether the wall surface temperature of the exhaust manifold 41 can reach the upper limit temperature according to the determination whether a predetermined output power increasing request is detected by the pedal depression amount sensor 71, for example, whether an output power increasing request (full load request) that makes the depression amount of the accelerator pedal to be maximum is detected. The ECU 50 functions as a determination section.

According to the injection amount restriction control program, when it is determined that the wall surface temperature of the exhaust manifold 41 can reach the upper limit temperature, the fuel injection amount is restricted to the predetermined upper limit injection amount according to the upper limit temperature. When determining that the wall surface temperature of the exhaust manifold 41 can reach the upper limit temperature, the ECU 50 restricts the fuel injection amount to the upper limit injection amount according to the injection amount restriction control program. The upper limit temperature of the wall surface temperature of the exhaust manifold 41 or a set value of the upper limit injection amount, which is set according to the upper limit temperature, is stored in, for example, the EEPROM 54, which is a non-volatile memory.

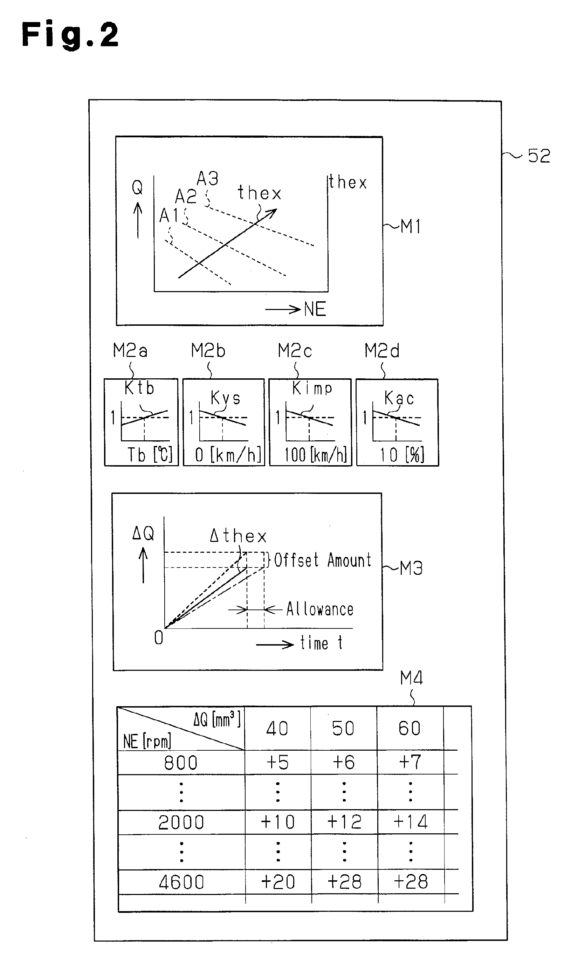

More specifically, as shown in Fig. 2, the ROM 52 stores a basic wall surface temperature estimation map M1. According to the wall surface temperature estimation map M1, a basic wall surface temperature thex of the exhaust manifold 41 is obtained based on an injection command value Q, which is supplied to each of the fuel injection valves 23 at every predetermined cycle, and the engine rotation speed NE. The ECU 50 uses the map M1 to function as a wall surface temperature estimation section that estimates the basic wall surface temperature thex of the exhaust manifold 41 according to the operation state (the fuel injection amount Q and the engine rotation speed NE) of the engine 10. As shown in Fig. 2, as the output power level of the engine 10 increases from A1 to A3, that is, as the acceleration request becomes greater, the estimated basic wall surface temperature thex increases. The estimation map M1 sets a relationship between the wall surface temperature thex and the fuel injection amount Q and the engine rotation speed NE when the engine 10 is running in a stable normal state.

The ROM 52 stores a plurality correction maps M2a, M2b, M2c, M2d. The correction maps M2a, M2b, M2c, M2d have map data for correcting the basic wall surface temperature thex, which is obtained by using the basic wall surface temperature estimation map M1, according to the operation environment of the vehicle and the operation state of the engine 10. The ROM 52 is a storing section that stores conditions for the correction. When it is determined that the ambient temperature in the vicinity of the engine 10 is lower than the reference temperature (for example, 25 degrees centigrade) based on the correction map M2a and the ambient temperature, which is detected by the temperature sensor 76, the ECU 50 executes a correction for reducing the basic wall surface temperature according to the temperature difference between the ambient temperature and the reference temperature. When the ambient temperature is higher than the reference temperature, the ECU 50 executes a correction for increasing the basic wall surface temperature thex according to the temperature difference between the ambient temperature and the reference temperature. If it is determined that the vehicle speed is equal to or greater than a predetermined speed (for example, 0 km/h) based on the correction map M2b and the vehicle speed, which is detected by the vehicle speed sensor 74, the ECU 50 executes a correction for lowering the basic wall surface temperature according to the vehicle speed.

If the supercharging pressure is higher than a predetermined pressure (for example, 100 Kpa), the ECU 50 executes a correction for lowering the basic wall surface temperature thex according to the supercharging pressure based on the correction map M2c and the supercharging pressure detected by the intake pipe pressure sensor 75. If the supercharging pressure is lower than the predetermined pressure, the ECU 50 executes a correction for increasing the basic wall surface temperature according to the supercharging pressure. When it is determined that the depression amount changing amount, which is a changing amount of the output power increasing request amount, is greater than the predetermined value (for example, 10%) based on the correction map M2d and the depression amount detected by the pedal depression amount sensor 71, the ECU 50 executes a correction for lowering the basic wall surface temperature thex. When it is determined that the depression amount changing amount is smaller than the predetermined value, the ECU 50 executes a correction for increasing the basic wall surface temperature thex according to the depression amount changing amount. Accordingly, the ECU 50 estimates the wall surface temperature of the exhaust manifold 41 of an actual vehicle, that is, the ECU 50 obtains the corrected wall surface temperature.

When determining that the wall surface temperature of the exhaust manifold 41 can reach the upper limit temperature, that is, when the predetermined output power increasing request is detected, the ECU 50 computes a period (temperature increasing period) from when it is determined that the wall surface temperature of the exhaust manifold 41 can reach the upper limit temperature to when the wall surface temperature reaches the upper limit temperature based on the detection information obtained from the wall surface temperature, which is estimated by the wall surface temperature estimation section, and the operation state detection section. That is, the ECU 50 functions as a time period computation section. The ECU 50 sets (corrects) the fuel injection amount Q to a corrected injection amount that is obtained by adding an offset amount (increase correction amount) according to the temperature increasing period to the upper limit injection amount. The ECU 50 functions as an injection amount correction section that corrects the fuel injection amount Q.

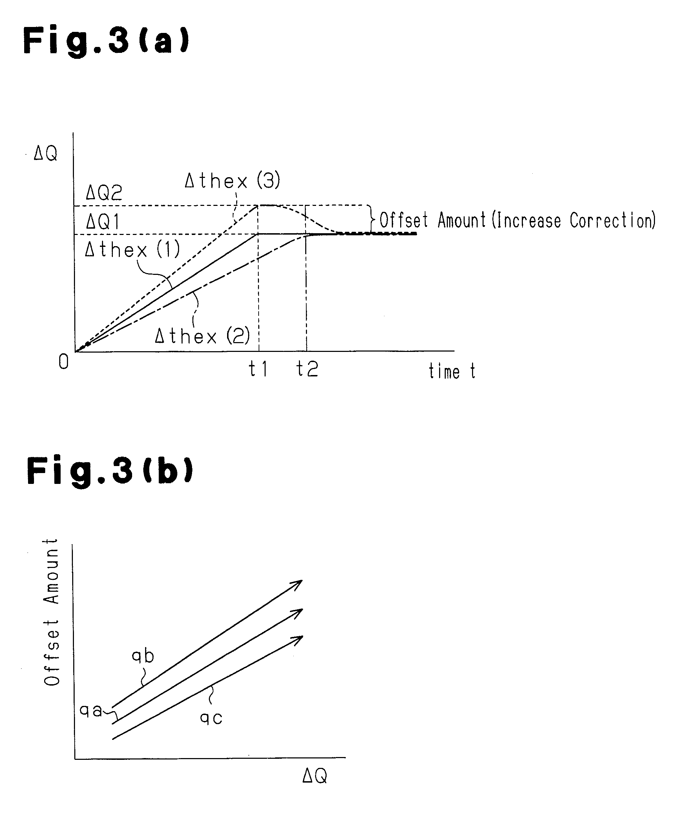

Specifically, as shown in Fig. 3(a), the ECU 50 functioning as the time period computation section computes a period (temperature increasing period) that is required for increasing the wall surface temperature of the exhaust manifold 41 when the output power increasing request is made to the upper limit temperature. At this time, the ECU 50 computes the temperature increasing period as a first period t1 according to the basic wall surface temperature thex obtained according to the estimation map M1 and computes the temperature increasing period as a second period t2 according to the corrected wall surface temperature. The periods t1, t2 may be obtained according to a previously prepared map. The first period t1 corresponds to the temperature increasing period during stable normal driving. The ECU 50 functioning as the injection amount correction section computes the difference (t2 - t1) between the first period t1 and the second period t2 as an allowance when the wall surface temperature increases to the upper limit temperature. The ECU 50 computes the fuel injection amount of the increase correction amount corresponding to the allowance (t2 - t1) (ΔQ2 - ΔQ1 in the example of Fig. 3(a)) as the offset amount. The ECU 50 increases and corrects the increasing injection amount ΔQ corresponding to the output power increasing request by the offset amount to obtain the corrected injection amount.

In other words, for example, when the time period that is required to increase the wall surface temperature of the exhaust manifold 41 from the value at the time of the output increasing request to the upper limit temperature is obtained simply according to the basic wall surface temperature thex, which is obtained according to the estimation map M1, the fuel injection amount after the output power increasing request corresponds to an amount that is obtained by adding the increasing injection amount ΔQ1 corresponding to the output power increasing request to the fuel injection amount Q1 at the time of the output power increasing request. However, taking the allowance (t2 - t1) into consideration, the fuel injection amount after the output power increasing request corresponds to an amount that is obtained by adding the increasing injection amount ΔQ2 corresponding to the output power increasing request to the fuel injection amount Q1 at the time of the output increasing request.

As shown in Fig. 3(a), if fuel of an amount obtained by adding the increasing injection amount ΔQ corresponding to the output power increasing request is injected for the first period t1, the temperature gradient of the wall surface temperature of the exhaust manifold 41 is not represented by Δthex(1) due to the operation environment of the vehicle and the operation state of the engine 10 but represented by Δthex(2). Therefore, the wall surface temperature of the exhaust manifold 41 does not reach the upper limit temperature until the fuel is injected for the second period t2. Therefore, if the increasing amount ΔQ of the injection amount command Q in response to the output power increasing request is set to ΔQ1 corresponding to the changing amount of the depression amount of the accelerator pedal, the output power of the engine 10 is restricted in a state where there is an extra time period until the wall surface temperature of the exhaust manifold 41 reaches the upper limit temperature. Therefore, the starting and acceleration response corresponding to the performance of the engine 10 are not obtained. The injection amount (offset amount) of the increase correction amount corresponding to the allowance obtained by increasing the wall surface temperature is obtained and the increasing injection amount ΔQ is increased and corrected by the offset amount that causes the temperature increase as represented by Δtex(3). This improves the starting and acceleration response. It is desirable that the injection amount is sufficiently corrected to be increased so as to contribute to the increase of the output power of the engine at an initial stage of the period t1, in which the allowance is a large value.

The ROM 52 stores a basic offset amount map M3 that is referred to when the offset amount corresponding to the allowance is obtained as the basic offset amount.

Further, the ROM 52 stores a correction map for correcting the fuel injection amount of the basic offset amount corresponding to the allowance based on the detection information (including the vehicle speed and the ambient temperature) from the operation state detection section. Like the correction maps M2a, M2b, M2c, M2d, the correction map is used for increasing or reducing the offset amount based on the detection information. Accordingly, the ECU 50 increases the fuel injection amount by an appropriate offset amount according to the model or the usage state of an actual vehicle, even in the transient operation state from when it is determined that the wall surface temperature of the exhaust manifold 41 can reach the upper limit temperature to when the wall surface temperature of the exhaust manifold reaches the upper limit temperature. The ECU 50 corrects the fuel injection amount to the corrected injection amount during the first period.

Specifically, with respect to a reference value of the detection information obtained from the operation state detection section (for example, the ambient temperature is 25 degrees centigrade), the basic offset amount is previously set corresponding to each engine rotation speed for every increasing injection amount ΔQ corresponding to the increasing amount of the pedal depression amount as shown by a table map M4 of Fig. 2. For example, when the increasing injection amount ΔQ is 40 mm³ and the engine rotation speed is 2000 rpm, the basic offset amount is +10 mm³. If the increasing injection amount ΔQ is 50 mm³ and the engine rotation speed is 2000 rpm, the basic offset amount is +12 mm³. If the increasing injection amount ΔQ is 60 mm³ and the engine rotation speed is 2000 rpm, the basic offset amount is +14 mm³. The basic offset amount is changed according to the increasing injection amount ΔQ and the detection value detected by the operation state detection section. That is, as shown in Fig. 3(b), the basic offset amount qa, which changes substantially in proportion to the increasing injection amount ΔQ, is corrected to an offset amount qb, which is corrected to be increased based on the detection information from the operation state detection section, or to an offset amount qc, which is corrected to be reduced based on the detection information from the operation state detection section.

As the engine rotation speed becomes greater, the basic offset amount is increased. In the present embodiment, for example, in a case where the increasing injection amount ΔQ is 50 mm³: the basic offset amount is +12 mm³ when the engine rotation speed is 2000 rpm; the basic offset amount is +6 mm³ when the engine rotation speed is 800 rpm; and the basic offset amount is +24 mm³ when the engine rotation speed is 4600 rpm. Similarly, in case where the increasing injection amount ΔQ is 60 mm³: the basic offset amount is +14 mm³ when the engine rotation speed is 2000 rpm; the basic offset amount is +7 mm³ when the engine rotation speed is 800 rpm; and the basic offset amount is +28 mm³ when the engine rotation speed is 4600 rpm.

Next, an operation will be explained.

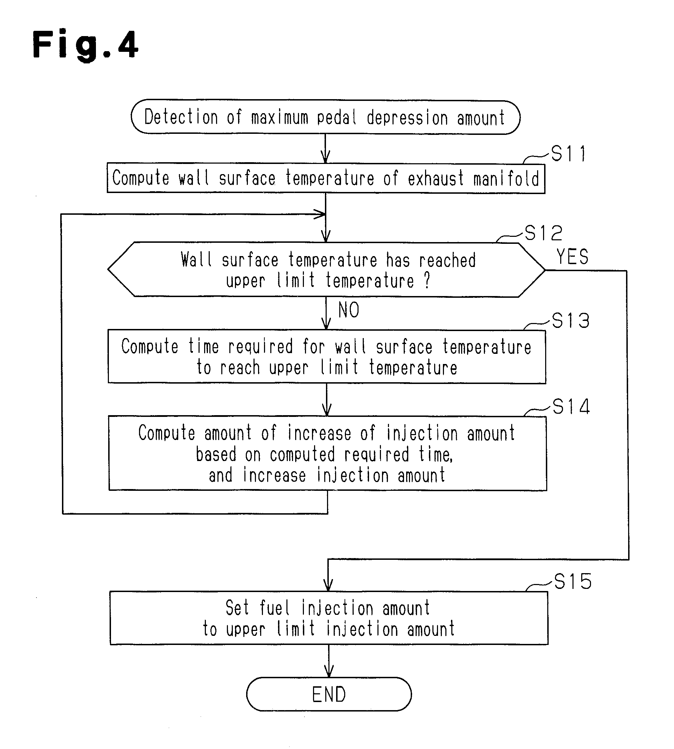

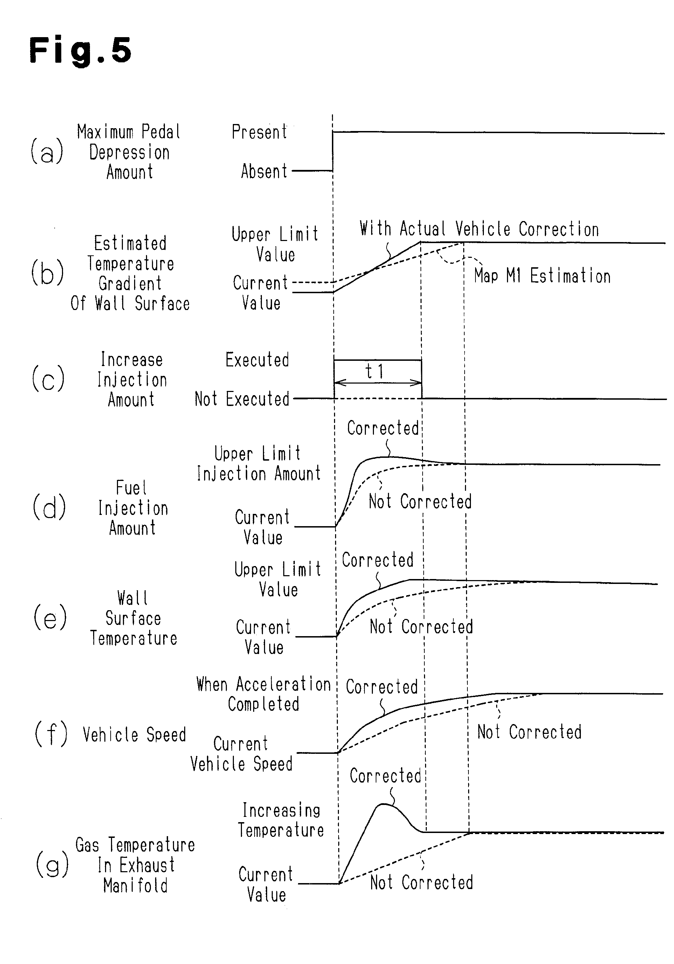

Fig. 4 is a flowchart showing a process according to a fuel injection amount restriction control program executed by the ECU 50 every predetermined period. Fig. 5 is a timing chart.

As shown by Figs. 4 and 5(a), when a predetermined output power increasing request is made, for example, when the maximum pedal depression amount, with which the wall surface temperature of the exhaust manifold 41 can reach the upper limit temperature, is detected, the process of the fuel injection amount restriction control program is started.

First, the ECU 50 computes the current wall surface temperature according to the running environment of the actual vehicle or the operation state of the engine 10 (step S11). Specifically, the ECU 50 computes the basic wall surface temperature thex corresponding to the current fuel injection amount Q and the current engine rotation speed NE based on the wall surface temperature estimation map M1, and corrects the basic wall surface temperature thex using the correction maps M2a, M2b, M2c, M2d based on the detection information from the temperature sensor 76, the vehicle speed sensor 74, the intake pipe pressure sensor 75, and the pedal depression amount sensor 71.

Next, the ECU 50 determines whether the corrected wall surface temperature has reached the predetermined upper limit temperature (for example, 700 degrees centigrade) at step S12. If the corrected wall surface temperature has reached the upper limit temperature, the ECU 50 sets the fuel injection amount to the upper limit injection amount (step S15) and terminates the process.

When it is determined that the corrected wall surface temperature has not reached the upper limit temperature in step S12, the ECU 50 computes the temperature increasing period corresponding to the case where the fuel injection amount is increased by the increasing injection amount ΔQ1, which corresponds to the increasing amount of the pedal depression amount, as the first period t1 according to the basic wall surface temperature thex obtained according to the estimation map M1 and as the second period t2 according to the corrected wall surface temperature (step S13). Then, the ECU 50 computes the allowance (t2 - t1), which is difference between the first period t1 and the second period t2, and computes the offset amount corresponding to the allowance (for example, corresponding to ΔQ2 - ΔQ1 in Fig. 3(a)). The ECU 50 further corrects the offset amount based on the vehicle speed or the ambient temperature to determine the increase correction amount of the offset amount and increases the fuel injection amount using the corrected offset amount during first period t1 (step S14).

Accordingly, in the present embodiment, the increasing amount ΔQ of the fuel injection amount when the output power increasing request is made is corrected to be increased corresponding to the allowance. Therefore, the actual gas temperature in the exhaust manifold 41 can momentarily exceed the upper limit temperature of the wall surface temperature of the exhaust manifold 41 (see Fig. 5(g)). However, the response of the engine 10 for the output power increasing request is appropriately improved (see Fig. 5(f)) such that the wall surface temperature of the exhaust manifold 41 does not exceed the upper limit temperature (see Fig. 5(f)).

Further, in the present embodiment, during the transient operation state from when it is determined that the wall surface temperature of the exhaust manifold 41 can reach the upper limit temperature (Fig. 5(a)) to when the wall surface temperature reaches the upper limit temperature (see Fig. 5(b)), the basic wall surface temperature estimated according to the estimation map M1 is corrected based on the detection information from the operation state detection section. Therefore, predetermined estimation accuracy is ensured for the wall surface temperature of the exhaust manifold 41 that changes according to the model or the usage state (speed or ambient temperature) of the actual vehicle. Since the offset amount, which is computed based on the estimated wall surface temperature, is further corrected to an appropriate offset amount corresponding to the model or the usage state of the actual vehicle, the fuel injection amount is corrected and increased appropriately corresponding to the model or the usage state of the actual vehicle.

Since the fuel injection amount of the engine 10 is sufficiently corrected and increased at an initial stage of the first period t1 (see Figs. 5(b) to 5(d)), good starting and acceleration response corresponding to the performance of the engine 10 is obtained when the acceleration request is made at which the pedal depression amount is maximum (see Fig. 5(f)).

As is explained above, according to the present invention, during the temperature increasing period (first period t1), which is from when it is determined that the wall surface temperature of the exhaust manifold 41 can reach the upper limit temperature to when the wall surface temperature reaches , the ECU 50 corrects the fuel injection amount to a corrected injection amount that is obtained by adding the increase correction amount corresponding to the temperature increasing period to the upper limit temperature based on the estimated wall surface temperature of the exhaust manifold 41 and the operation state of the engine 10. Therefore, the engine output performance for the output power increasing request is improved while the wall surface temperature of the exhaust manifold 41 is prevented from exceeding the upper limit temperature. The present invention is applicable to a general control device of an internal combustion engine that controls an operation state such that the wall surface temperature of an exhaust manifold does not exceed the upper limit temperature such as a control device of a diesel engine.

## Claims

1. A control device for an internal combustion engine, comprising:
a request detection section that detects an output power increasing request that increases an output power of the internal combustion engine;
an operation state detection section that detects an operation state of the internal combustion engine including rotation speed of the internal combustion engine;
an injection amount computation section that computes a fuel injection amount of the internal combustion engine based on detection information obtained by the request detection section and the operation state detection section; and
a determination section that determines whether a wall surface temperature of an exhaust manifold that is mounted in the internal combustion engine can reach a previously set upper limit temperature when fuel of the fuel injection amount computed by the injection amount computation section is injected,
wherein, when it is determined that the wall surface temperature of the exhaust manifold can reach the upper limit temperature, the fuel injection amount is restricted to an upper limit injection amount that is previously set according to the upper limit temperature, the control device being **characterized by:**
a wall surface temperature estimation section that estimates the wall surface temperature of the exhaust manifold based on the detection information obtained by the operation state detection section;
a time period computation section that, when it is determined that the wall surface temperature of the exhaust manifold can reach the upper limit temperature, computes a temperature increasing period from when it is determined that the wall surface temperature of the exhaust manifold can reach the upper limit temperature to when the wall surface temperature reaches the upper limit temperature based on the estimated wall surface temperature and the detection information obtained by the operation state detection section; and
an injection amount correction section that corrects the fuel injection amount to a corrected injection amount that is obtained by adding an increase correction amount corresponding to the temperature increasing period to the upper limit injection amount during the temperature increasing period.

2. The control device according to claim 1, wherein the injection amount correction section corrects the fuel injection amount to the corrected injection amount at an initial stage of the temperature increasing period.

3. The control device according to claim 1 or 2, wherein the request detection section detects a full load request of the internal combustion engine.

4. The control device according to any one of claims 1 to 3, wherein the internal combustion engine is a diesel engine.

5. The control device according to any one of claims 1 to 4, wherein the wall surface temperature estimation section has a temperature estimation map that is used for obtaining a basic wall surface temperature of the exhaust manifold based on rotation speed of the internal combustion engine and the fuel injection amount, and corrects the obtained basic wall surface temperature according to the operation state of the internal combustion engine, thereby obtaining a corrected wall surface temperature,
wherein, when the request detection section detects the output power increasing request, the injection amount computation section computes an increasing amount of the fuel injection amount corresponding to the output power increasing request and the time period computation section computes the temperature increasing period as a first period according to the basic wall surface temperature obtained according to the temperature estimation map and computes the temperature increasing period as a second period according to the corrected wall surface temperature, and
wherein the injection amount correction section computes the difference between the first period and the second period as an allowance used when the wall surface temperature increases to the upper limit temperature, and computes an increase correction amount of the fuel injection amount according to the allowance.

6. The control device according to claim 5, wherein the fuel injection correction section further corrects the increase correction amount obtained according to the allowance based on the detection information obtained by the operation state detection section.

7. The control device according to claim 5 or 6, wherein the wall surface temperature estimation section has a storing section that stores correction conditions, and wherein, when the correction conditions are met, the basic wall surface temperature estimated according to the basic wall surface temperature estimation map is corrected based on the detection information obtained by the operation state detection section.

8. The control device according to any one of claims 1 to 7, wherein the operation state detection section detects at least one of the speed of the vehicle having the internal combustion engine, an ambient temperature of the internal combustion engine, a changing amount of the output increasing request, and supercharging pressure of the internal combustion engine.
